# EUROPEAN PATENT SPECIFICATION

(11) **EP 3 992 131 B1**
(45) Date of publication and mention of the grant of the patent: **28.08.2024**
(21) Application number: 21205931.5
(22) Date of filing: 02.11.2021
(51) Int. Cl.: B66B 1/46

(54) **ELEVATOR CONTROL DEVICE, METHOD OF DETERMINING TRIGGERING OF THE ELEVATOR CONTROL DEVICE, AND ELEVATOR SYSTEM**
AUFZUGSSTEUERVORRICHTUNG, VERFAHREN ZUR BESTIMMUNG DER AUSLÖSUNG DER AUFZUGSSTEUERVORRICHTUNG UND AUFZUGSSYSTEM
DISPOSITIF DE COMMANDE D'ASCENSEUR, PROCÉDÉ DE DÉTERMINATION DU DÉCLENCHEMENT DU DISPOSITIF DE COMMANDE D'ASCENSEUR ET SYSTÈME D'ASCENSEUR

(30) Priority: 03.11.2020 CN 202011208853
(43) Date of publication of application: 04.05.2022
(73) Proprietor: Otis Elevator Company, Farmington, Connecticut 06032 (US)
(72) Inventor: Qiu, Heping, Shanghai, 200335 (CN); Guo, Xiaofei, Shanghai, 200335 (CN); Zeng, Renjie, Shanghai, 200335 (CN)
(74) Representative: Dehns

(56) References cited:
- EP-A1- 3 412 613
- CN-A- 111 573 457
- TW-A- 200 607 741
- DATABASE WPI Week 202007, Derwent World Patents Index; AN 2020-848020

## Description

### FIELD OF THE INVENTION

The present invention relates to the field of control devices, and more specifically, the present disclosure relates to an elevator control device, a method for determining triggering of an elevator control device, and an elevator system.

### BACKGROUND OF THE INVENTION

Recently, in response to the pandemic of the new coronavirus, major manufacturers have all focused on the research of non-contact elevator control devices. Existing non-contact elevator control devices include infrared induction or capacitive induction non-contact control buttons, which can only realize the identification of existence of objects within a specific distance range. TW 200607741 A discloses a control panel of an elevator comprising a number of button sets used to activate an operational controller for controlling the elevator. Each button set includes a push-type switch and a proximity sensing device TW 200607741 A discloses the preamble of claims 1 and 10. EP 3412613 A1 discloses an elevator operator panel, having at least one button and an audio orientation system. The audio orientation system includes a proximity sensor associated with an associated button, the proximity sensor arranged to generate a button detection zone around the associated button.

### SUMMARY OF THE INVENTION

An object of the present invention is to solve or at least alleviate the problems existing in the prior art.

According to a first aspect of the present invention, an elevator control device according to claim 1 is provided.

Optionally, in an embodiment of the elevator control device, the control panel includes:
a button panel, the non-contact sensor being located on a back side of the button panel; and
a printed circuit board, the non-contact sensor being electrically coupled to the printed circuit board;
wherein the printed circuit board further includes the micro switch, and the button panel is supported by a spring member, so that pressing the button panel can further cause the micro switch on the printed circuit board to be pressed.

Optionally, in an embodiment of the elevator control device, the non-contact sensor is a TOF sensor capable of sensing a distance from an object, and the proximity signal includes distance information.

The elevator control device further includes a processor connected to the control panel to receive the proximity signal and the contact signal.

The processor is configured to, when receiving at least two proximity signals with gradually decreasing distance information sent by any designated button of the plurality of buttons in time sequence within a specific time period T, determine that the designated button is triggered.

Optionally, in an embodiment of the elevator control device, the processor is configured to receive any two signals sent by any designated button of the plurality of buttons in time sequence within a specific time period T, wherein the two signals include first distance information a₁ and second distance information a₂ respectively, and when the two signals satisfy that the first distance signal a₁ is in a first distance range R₁ and the second distance signal a₂ is in a second distance range R₂, it is determined that the designated button is triggered, wherein an intermediate value of the first distance range R₁ is larger than an intermediate value of the second distance range R₂.

Optionally, in an embodiment of the elevator control device, the processor is configured to receive any three signals sent by any designated button of the plurality of buttons in time sequence within a specific time period T, wherein the three signals include first distance information a₁, second distance information a₂ and third distance information as respectively, and when the three signals satisfy that the first distance signal a₁ is in a first distance range R₁, the second distance signal a₂ is in a second distance range R₂ and the third distance signal a₃ is in a third distance range R₃, it is determined that the designated button is triggered, wherein an intermediate value of the first distance range R₁ is larger than an intermediate value of the second distance range R₂, and the intermediate value of the second distance range R₂ is larger than an intermediate value of the third distance range R₃.

Optionally, in an embodiment of the elevator control device, the processor is configured to, when receiving the contact signal sent by the micro switch of any designated button of the plurality of buttons due to being pressed, determine that the designated button is triggered.

Optionally, in an embodiment of the elevator control device, the button panel is a light-transmitting panel, and the printed circuit board is further provided with LED lights, which are lit up when the button is triggered.

Optionally, in an embodiment of the elevator control device, the non-contact sensor is adhered to the back side of the button panel, and the button panel is elastically supported on the printed circuit board by a spring.

According to a second aspect of the present invention, an elevator system according to claim 9 is provided.

According to a third aspect of the present invention, a method for determining triggering of an elevator control device according to claim 10 is provided.

Optionally, the method further includes receiving any two signals sent by any designated button of the plurality of buttons in time sequence within the specific time period T, wherein the two signals include first distance information a₁ and second distance information a₂ respectively, and when the two signals satisfy that the first distance signal a₁ is in a first distance range R₁ and the second distance signal a₂ is in a second distance range R₂, it is determined that the designated button is triggered, wherein an intermediate value of the first distance range R₁ is larger than an intermediate value of the second distance range R₂.

Optionally, the method further includes receiving any three signals sent by any designated button of the plurality of buttons in time sequence within the specific time period T, wherein the three signals include first distance information a₁, second distance information a₂ and third distance information as respectively, and when the three signals satisfy that the first distance signal a₁ is in a first distance range R₁, the second distance signal a₂ is in a second distance range R₂ and the third distance signal as is in a third distance range R₃, it is determined that the designated button is triggered, wherein an intermediate value of the first distance range R₁ is larger than an intermediate value of the second distance range R₂, and the intermediate value of the second distance range R₂ is larger than an intermediate value of the third distance range R₃.

Optionally, the method further includes: when receiving the contact signal sent by the micro switch of any designated button of the plurality of buttons due to being pressed, determining that the designated button is triggered.

The device and method according to the embodiments of the present invention can effectively identify contact triggering and non-contact triggering.

### BRIEF DESCRIPTION OF THE DRAWINGS

With reference to the accompanying drawings, the disclosure of the present invention will become easier to understand. It can be easily understood by those skilled in the art that these drawings are only for illustrative purpose, and are not intended to limit the scope of protection of the present invention. In addition, similar numbers in the drawings are used to denote similar components, in which:
FIG. 1 shows a schematic view of a control device according to an embodiment of the present disclosure;
FIG. 2 shows a schematic structural view of a button according to the embodiment of the present disclosure;
FIG. 3 shows a schematic principle view of a TOF sensor used by the button according to the embodiment of the present disclosure; and
FIGS. 4 and 5 show schematic views of typical signals collected by a TOF sensor.

### DETAILED DESCRIPTION OF THE EMBODIMENT(S) OF THE INVENTION

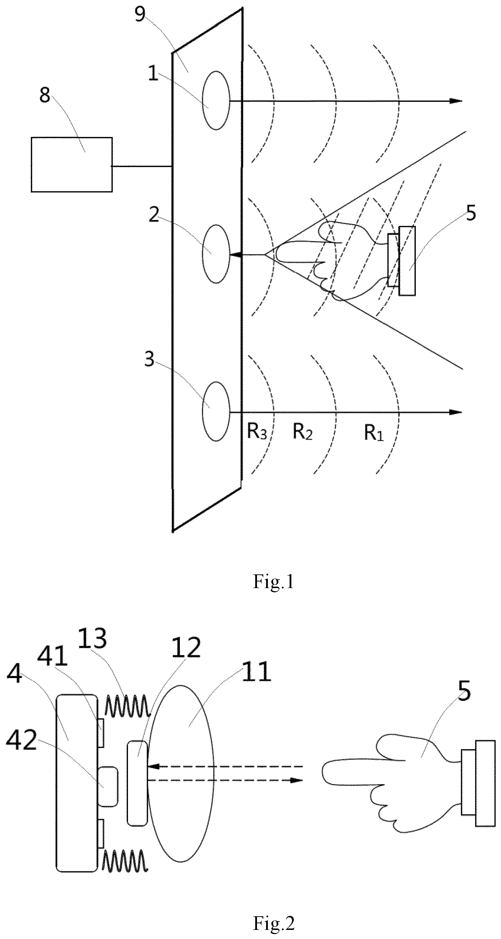

Reference is made to FIG. 1, which shows a control device according to an embodiment of the present invention. The control device includes a control panel 9 having a plurality of buttons, and the plurality of buttons may include a first button 1, a second button 2 and a third button 3 as illustrated. Although only three buttons are shown, in fact, the plurality of buttons refer to two or more than two buttons. The control device is an elevator control device in a building, and the control panel may be installed in an elevator hall or elevator car. The plurality of buttons may be, for example, an elevator-calling button, a going-up button, a going-down button, a door-opening button, a door-closing button, a floor selecting button, and an alarm button in the elevator control panel, etc. In the embodiment according to the present invention, each button includes a non-contact sensor and a micro switch, wherein the non-contact sensor can sense that an object is approaching the button and generate a proximity signal, and the micro switch can generate a contact signal when the button is pressed. Therefore, the control device according to the embodiment of the present invention can be triggered in either a non-contact manner or a contact manner, which is friendly to people to whom non-contact triggering is inconvenient, such as blind people.

Continuing to refer to FIG. 2, in some specific embodiments, each of the plurality of buttons may include; a button panel 11; a non-contact sensor 12 located on a back side of the button panel 11, wherein the non-contact sensor 12 can sense the approaching of an object; and a printed circuit board 4, wherein the non-contact sensor 12 is electrically coupled to the printed circuit board 4, so that the non-contact sensor 12 can communicate with the printed circuit board 4 and can be powered by the printed circuit board 4. In addition, the printed circuit board 4 further includes a micro switch 42, and the button panel 11 is supported by a spring member 13, e.g., supported on the printed circuit board 4 or on a substrate of the control panel 9 shown in FIG. 1, so that the button panel 11 can further press the micro switch 42 on the printed circuit board 4, and the micro switch 42 generates a contact signal after being pressed. The printed circuit board 4 can be connected to some or all of the buttons in order to receive the proximity signal and the contact signal output by each button and send these signals to a processor 8. In some embodiments, the non-contact sensor 12 may be a proximity sensor based on infrared sensing, Hall effect sensing, etc., which can sense whether there is an object within a detectable distance, and output the proximity signal when there is an object. In some embodiments of the present invention, some or all of the plurality of buttons may be equipped with TOF sensors.

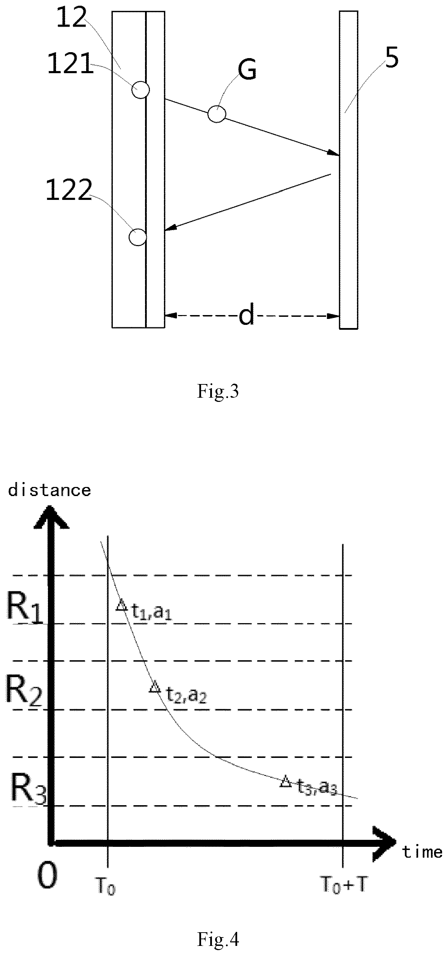

Continuing to refer to FIG. 3, a TOF (time of fly) sensor is also called a time-of-flight sensor. It can not only detect the approaching of an object, that is, detect whether the object is within a detectable distance, but also can detect information of the distance from the object to the button. The TOF sensor 12 may include a photon emitter 121 and a photon receiver 122. The photon emitter 121 emits a photon G, which is reflected after contacting an object 5, and which is received by the photon receiver 122. Through the time of fly of the photon G and the speed of light, the distance to the object 5 is calculated.

According to the invention, as shown in FIG. 1, the control device further includes a processor 8. The printed circuit board 4 may be connected to the plurality of buttons and the processor 8, thereby realizing connections between the plurality of buttons and the processor 8, including electrical and/or signal connections. The processor 8 is connected to the plurality of buttons of the control panel 9 to receive proximity signals or contact signals sent by the plurality of buttons, wherein the proximity signals may include distance information. The processor 8 may be integrated at the control panel 9 or may be arranged remotely. In some embodiments, the processor 8 may be configured to, when receiving the contact signal sent by the micro switch of any designated button of the plurality of buttons due to being pressed, determine that the designated button is triggered (also referred to as contact triggering). In some embodiments, the panel 11 is a light-transmitting panel, and the printed circuit board 4 is further provided with LED lights 41, which are lit up after the button is triggered (including both the contact triggering, and non-contact triggering to be described in detail below).

In some embodiments, when the button is equipped with the TOF sensor, the processor 8 may be configured to, when receiving at least two or at least three proximity signals with gradually decreasing distance information sent by any one of the plurality of buttons (hereinafter referred to as designated button) in time sequence within a specific time period T, determine that the designated button is triggered (non-contact triggering). For example, the distance information of the first signal and the second signal sent by a button within a specific time period T sequentially is a₁ and a₂ respectively, and when a₁>a₂, it is determined that the button is triggered in a non-contact manner. Alternatively, for example, the distance information of the first signal, the second signal and the third signal sent by a button within a specific time period T sequentially is a₁, a₂ and as respectively, and when a₁>a₂>a₃, it is determined that the button is triggered in a non-contact manner. Through such determination, an approaching operation of the finger can be accurately identified, and false triggering caused by misidentification can be avoided.

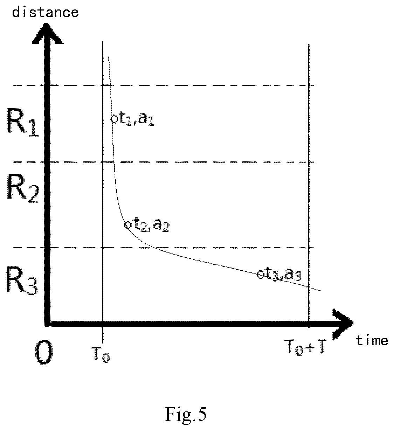

In some embodiments, the processor 8 may be configured to receive any three signals sent by any one of the plurality of buttons (hereinafter referred to as designated button) in time sequence within a specific time period T, wherein the three signals include first distance information a₁, second distance information a₂ and third distance information as respectively, and when the three signals satisfy that the first distance signal a₁ is in a first distance range R₁, the second distance signal a₂ is in a second distance range R₂ and the third distance signal a₃ is in a third distance range R₃, it is determined that the designated button is triggered (non-contact triggering), wherein an intermediate value of the first distance range R₁ is larger than an intermediate value of the second distance range R₂, and the intermediate value of the second distance range R₂ is larger than an intermediate value of the third distance range R₃. For example, the third distance range R₃ may be an range of 0-2 cm of the distance from the button, with an intermediate value of 1 cm; the second distance range R₂ may be an range of 2-4 cm of the distance from the button, with an intermediate value of 3 cm; and the first distance range R₁ may be an range of 4-6 cm of the distance from the button, with an intermediate value of 5 cm. The first distance range R₁, the second distance range R₂ and the third distance range R₃ may be arbitrarily set within the detectable range of the TOF sensor. For example, as shown in FIGS. 1 and 5, the first distance range R₁, the second distance range R₂ and the third distance range R₃ may be adjacent. In some other embodiments, as shown in FIG. 4, the first distance range R₁, the second distance range R₂ and the third distance range R₃ may be spaced apart. Alternatively, although not shown, the first distance range R₁, the second distance range R₂ and the third distance range R₃ may also partially overlap. For example, the TOF sensor may collect N (such as 50, depending on the sampling frequency and the size of the time period T) signals including distance information in the specific time period T. If there are any three signals which satisfy that the first distance signal a₁ at time t₁ is in the first distance range R₁, the second distance signal a₂ at time t₂ is in the second distance range R₂ and the third distance signal as at time t₃ is in the third distance range R₃, wherein t₁<t₂<t₃, then the processor 8 determines that the designated button is triggered in a non-contact manner. In some embodiments, in a case where there is no aforementioned non-contact triggering operation, the processor invalidates the received proximity signals. In this way, the triggering action of the user's finger approaching the button can be accurately captured, and other operations such as the user's translation on the panel can be filtered out. For example, even if the user's hand passes through identification areas of certain buttons when the user naturally puts down the hand after pressing the button, the signals detected by these buttons will be ignored because they do not meet the above identification conditions. The above-mentioned specific time period T may be selected based on actual conditions (for example, depending on the required sensitivity); for example, it may be in a range of 0.5-2 seconds, or for example, in a range of 0.8-1.5 seconds. As shown in FIG. 4 and FIG. 5, a calculation starting point T₀ of the specific time period T may be any point or may be a designated point; for example, T₀ is selected every other designated time range, such as 0.2 seconds.

In the above embodiments, three signals and three distance ranges are used as the judgment basis, and in some embodiments, only two signals and two distance ranges may be used as the judgment basis for non-contact button operation. In some embodiments, the processor 8 may be configured to receive any two signals sent by any designated button of the plurality of buttons in time sequence within a specific time period T, wherein the two signals include first distance information a₁ and second distance information a₂ respectively, and when the two signals satisfy that the first distance signal a₁ is in the first distance range R₁ and the second distance signal a₂ is in the second distance range R₂, it is determined that the designated button is triggered, wherein an intermediate value of the first distance range R₁ is larger than an intermediate value of the second distance range R₂.

Next, reference is made to FIGS. 4 and 5, which show typical curves from which non-contact button operations can be identified. It should be understood that the curves in the figures are fitted by collected signals, and the non-contact button operation can be determined as long as any three of the data points in the curves satisfy the condition.

According to another aspect, an elevator system is provided, wherein the elevator system includes the control device according to various embodiments, which serves as a hall control device or an in-car control device.

In further another aspect, a method for determining triggering of an elevator control device is provided, wherein the elevator control device includes a control panel including a plurality of buttons, and the method includes: generating a proximity signal when a non-contact sensor of the plurality of buttons senses the approaching of an object, the proximity signal including distance information; and when receiving at least two or at least three signals with gradually decreasing distance information sent by any designated button of the plurality of buttons in time sequence within a specific time period T, determining that the designated button is triggered in a non-contact manner. The method for determining triggering according to the embodiment of the present invention can capture the action of the user's finger approaching the button and filter out other actions, so as to prevent the button from being false triggered.

In some embodiments, the method may further include receiving any three signals including first distance information a₁, second distance information a₂ and third distance information as and sent by any designated button of the plurality of buttons in time sequence within a specific time period T, wherein when the three signals satisfy that the first distance signal a₁ is in a first distance range R₁, the second distance signal a₂ is in a second distance range R₂ and the third distance signal as is in a third distance range R₃, it is determined that the designated button is triggered, wherein an intermediate value of the first distance range R₁ is larger than an intermediate value of the second distance range R₂, and the intermediate value of the second distance range R₂ is larger than an intermediate value of the third distance range R₃. By adopting distance range identification, the user's action of non-contact button pressing can be captured more accurately. In some embodiments, the method may further include: when receiving the contact signal sent by the micro switch of any designated button of the plurality of buttons due to being triggered, determining that the designated button is triggered.

The specific embodiments described above are merely for describing the principle of the present invention more clearly, and various components are clearly illustrated or depicted to make it easier to understand the principle of the present disclosure. Those skilled in the art can readily make various modifications or changes to the present invention without departing from the scope of the appended claims. Therefore, it should be understood that these modifications or changes should be included within the scope of protection of the appended claims.

## Claims

1. An elevator control device, comprising a control panel (9) comprising a plurality of buttons (1, 2, 3), the buttons (1, 2, 3) comprising:
a non-contact sensor (12), which is capable of sensing the approaching of an object (5) and generating a proximity signal; and
a micro switch (42), which is capable of generating a contact signal when the button (1, 2, 3) is pressed; wherein the elevator control device further comprises:
a processor (8) connected to the control panel (9) to receive the proximity signal and the contact signal; **characterised in that**:
the processor (8) is configured to, when receiving at least two or at least three proximity signals with gradually decreasing distance information sent by any designated button of the plurality of buttons (1, 2, 3) in time sequence within a specific time period T, determine that the designated button (1, 2, 3) is triggered.

2. The elevator control device according to claim 1, wherein the control panel (9) comprises:
a button panel (11), the non-contact sensor (12) being located on a back side of the button panel (11); and
a printed circuit board (4), the non-contact sensor (12) being electrically coupled to the printed circuit board (4);
wherein the printed circuit board (4) further comprises the micro switch (42), and the button panel (11) is supported by a spring member (13), so that pressing the button panel (11) can further cause the micro switch (42) on the printed circuit board (4) to be pressed.

3. The elevator control device according to claim 1 or 2, wherein the non-contact sensor (12) is a TOF sensor (12, 121, 122) capable of sensing a distance from an object, and the proximity signal comprises distance information.

4. The elevator control device according to any preceding claim , wherein the processor (8) is configured to receive any two signals sent by any designated button (1, 2, 3) of the plurality of buttons (1, 2, 3) in time sequence within a specific time period T, wherein the two signals comprise first distance information a₁ and second distance information a₂ respectively, and when the two signals satisfy that the first distance signal a₁ is in a first distance range R₁ and the second distance signal a₂ is in a second distance range R₂, it is determined that the designated button (1, 2, 3) is triggered, wherein an intermediate value of the first distance range R₁ is larger than an intermediate value of the second distance range R₂.

5. The elevator control device according to any preceding claim, wherein the processor (8) is configured to receive any three signals sent by any designated button (1, 2, 3) of the plurality of buttons (1, 2, 3) in time sequence within a specific time period T, wherein the three signals comprise first distance information a₁, second distance information a₂ and third distance information as respectively, and when the three signals satisfy that the first distance signal a₁ is in a first distance range R₁, the second distance signal a₂ is in a second distance range R₂ and the third distance signal as is in a third distance range R₃, it is determined that the designated button (1, 2, 3) is triggered, wherein an intermediate value of the first distance range R₁ is larger than an intermediate value of the second distance range R₂, and the intermediate value of the second distance range R₂ is larger than an intermediate value of the third distance range R₃.

6. The elevator control device according to any one of claims 1 to 5, wherein the processor (8) is configured to, when receiving the contact signal sent by the micro switch (42) of any designated button of the plurality of buttons (1, 2, 3) due to being pressed, determine that the designated button (1, 2, 3) is triggered.

7. The elevator control device according to anyone of claims 2 to 6, wherein the button panel (11) is a light-transmitting panel, and the printed circuit board (4) is further provided with LED lights (41), which are lit up when the button (1, 2, 3) is triggered.

8. The elevator control device according to any one of claims 2 to 7, wherein the non-contact sensor (12) is adhered to the back side of the button panel (11), and the button panel (11) is elastically supported on the printed circuit board (4) by a spring (13).

9. An elevator system, comprising the elevator control device according to any one of claims 1 to 8.

10. A method for determining triggering of an elevator control device, wherein the elevator control device comprises a control panel (9) comprising a plurality of buttons (1, 2, 3), the buttons (1, 2, 3) comprise a non-contact sensor (12) and a micro switch (42), and the method comprises:
generating a proximity signal when any one of the plurality of buttons (1, 2, 3) senses the approaching of an object (5), the proximity signal comprising distance information; and is **characterised in that**:
when receiving at least two or at least three signals with gradually decreasing distance information sent by any designated button (1, 2, 3) of the plurality of buttons (1, 2, 3) in time sequence within a specific time period T, determining that the designated button (1, 2, 3) is triggered.

11. The method for determining according to claim 10, further comprising receiving any two signals sent by any designated button of the plurality of buttons (1, 2, 3) in time sequence within the specific time period T, wherein the two signals comprise first distance information a₁ and second distance information a₂ respectively, and when the two signals satisfy that the first distance signal a₁ is in a first distance range R₁ and the second distance signal a₂ is in a second distance range R₂, it is determined that the designated button (1, 2, 3) is triggered, wherein an intermediate value of the first distance range R₁ is larger than an intermediate value of the second distance range R₂.

12. The method for determining according to claim 10 or 11, further comprising receiving any three signals sent by any designated button (1, 2, 3) of the plurality of buttons (1, 2, 3) in time sequence within the specific time period T, wherein the three signals comprise first distance information a₁, second distance information a₂ and third distance information as respectively, and when the three signals satisfy that the first distance signal a₁ is in a first distance range R₁, the second distance signal a₂ is in a second distance range R₂ and the third distance signal as is in a third distance range R₃, it is determined that the designated button (1, 2, 3) is triggered, wherein an intermediate value of the first distance range R₁ is larger than an intermediate value of the second distance range R₂, and the intermediate value of the second distance range R₂ is larger than an intermediate value of the third distance range R₃.

13. The method for determining according to claim 10, 11 or 12, further comprising: when receiving the contact signal sent by the micro switch (42) of any designated button (1, 2, 3) of the plurality of buttons (1, 2, 3) due to being pressed, determining that the designated button (1, 2, 3) is triggered.

## Patentansprüche

1. Aufzugssteuervorrichtung, umfassend ein Bedienfeld (9), das eine Vielzahl von Tasten (1, 2, 3) umfasst, wobei die Tasten (1, 2, 3) Folgendes umfassen:
einen berührungslosen Sensor (12), der in der Lage ist, die Annäherung eines Objekts (5) zu erfassen und ein Näherungssignal zu erzeugen; und
einen Mikroschalter (42), der in der Lage ist, ein Kontaktsignal zu erzeugen, wenn die Taste (1, 2, 3) betätigt wird; wobei die Aufzugssteuervorrichtung ferner Folgendes umfasst:
einen Prozessor (8), der mit dem Bedienfeld (9) verbunden ist, um das Näherungssignal und das Kontaktsignal zu empfangen; **dadurch gekennzeichnet, dass**:
der Prozessor (8) dazu konfiguriert ist, beim Empfangen von mindestens zwei oder mindestens drei Näherungssignalen mit allmählich abnehmenden Entfernungsinformationen, gesendet von einer beliebigen vorgesehenen Taste der Vielzahl von Tasten (1, 2, 3) in zeitlicher Abfolge innerhalb eines bestimmten Zeitraums T, festzulegen, dass die vorgesehene Taste (1, 2, 3) ausgelöst wird.

2. Aufzugssteuervorrichtung nach Anspruch 1, wobei das Bedienfeld (9) Folgendes umfasst:
ein Tastenfeld (11), wobei sich der berührungslose Sensor (12) auf einer Rückseite des Tastenfelds (11) befindet; und
eine Leiterplatte (4), wobei der berührungslose Sensor (12) elektrisch mit der Leiterplatte (4) gekoppelt ist;
wobei die Leiterplatte (4) ferner den Mikroschalter (42) umfasst und das Tastenfeld (11) durch ein Federelement (13) gestützt wird, so dass ein Betätigen des Tastenfelds (11) ferner dazu führen kann, dass der Mikroschalter (42) auf der Leiterplatte (4) betätigt wird.

3. Aufzugssteuervorrichtung nach Anspruch 1 oder 2, wobei der berührungslose Sensor (12) ein TOF-Sensor (12, 121, 122) ist, der in der Lage ist, einen Abstand von einem Objekt zu erfassen, und das Näherungssignal Abstandsinformationen umfasst.

4. Aufzugssteuervorrichtung nach einem der vorhergehenden Ansprüche, wobei der Prozessor (8) dazu konfiguriert ist, zwei beliebige Signale zu empfangen, die von einer beliebigen vorgesehenen Taste (1, 2, 3) der Vielzahl von Tasten (1, 2, 3) in zeitlicher Abfolge innerhalb eines bestimmten Zeitraums T gesendet werden, wobei die zwei Signale jeweils erste Entfernungsinformationen a₁ und zweite Entfernungsinformationen a₂ umfassen und, wenn die zwei Signale erfüllen, dass das erste Entfernungssignal a₁ in einem ersten Entfernungsbereich R₁ liegt und das zweite Entfernungssignal a₂ in einem zweiten Entfernungsbereich R₂ liegt, festgelegt wird, dass die vorgesehene Taste (1, 2, 3) ausgelöst wird, wobei ein Zwischenwert des ersten Entfernungsbereichs R₁ größer ist als ein Zwischenwert des zweiten Entfernungsbereichs R₂.

5. Aufzugssteuervorrichtung nach einem der vorhergehenden Ansprüche, wobei der Prozessor (8) dazu konfiguriert ist, drei beliebige Signale zu empfangen, die von einer beliebigen vorgesehenen Taste (1, 2, 3) der Vielzahl von Tasten (1, 2, 3) in zeitlicher Abfolge innerhalb eines bestimmten Zeitraums T gesendet werden, wobei die drei Signale jeweils erste Entfernungsinformationen a₁, zweite Entfernungsinformationen a₂ und dritte Entfernungsinformationen a₃ umfassen und, wenn die drei Signale erfüllen, dass das erste Entfernungssignal a₁ in einem ersten Entfernungsbereich R₁ liegt, das zweite Entfernungssignal a₂ in einem zweiten Entfernungsbereich R₂ liegt und das dritte Entfernungssignal a₃ in einem dritten Entfernungsbereich R₃ liegt, festgelegt wird, dass die vorgesehene Taste (1, 2, 3) ausgelöst wird, wobei ein Zwischenwert des ersten Entfernungsbereichs R₁ größer ist als ein Zwischenwert des zweiten Entfernungsbereichs R₂ und der Zwischenwert des zweiten Entfernungsbereichs R₂ größer ist als ein Zwischenwert des dritten Entfernungsbereichs R₃.

6. Aufzugssteuervorrichtung nach einem der Ansprüche 1 bis 5, wobei der Prozessor (8) dazu konfiguriert ist, beim Empfangen des Kontaktsignals, das vom Mikroschalter (42) einer beliebigen vorgesehenen Taste der Vielzahl von Tasten (1, 2, 3) aufgrund von deren Betätigung gesendet wird, festzulegen, dass die vorgesehene Taste (1, 2, 3) ausgelöst wird.

7. Aufzugssteuervorrichtung nach einem der Ansprüche 2 bis 6, wobei das Tastenfeld (11) ein lichtdurchlässiges Feld ist und die Leiterplatte (4) ferner mit LED-Leuchten (41) versehen ist, die aufleuchten, wenn die Taste (1, 2, 3) ausgelöst wird.

8. Aufzugssteuervorrichtung nach einem der Ansprüche 2 bis 7, wobei der berührungslose Sensor (12) auf der Rückseite des Tastenfelds (11) aufgeklebt ist und das Tastenfeld (11) durch eine Feder (13) elastisch auf der Leiterplatte (4) abgestützt ist.

9. Aufzugssystem, umfassend die Aufzugssteuervorrichtung nach einem der Ansprüche 1 bis 8.

10. Verfahren zum Festlegen des Auslösens einer Aufzugssteuervorrichtung, wobei die Aufzugssteuervorrichtung ein Bedienfeld (9) umfasst, das eine Vielzahl von Tasten (1, 2, 3) umfasst, die Tasten (1, 2, 3) einen berührungslosen Sensor (12) und einen Mikroschalter (42) umfassen und das Verfahren Folgendes umfasst:
Erzeugen eines Näherungssignals, wenn eine beliebige der Vielzahl von Tasten (1, 2, 3) die Annäherung eines Objekts (5) erkennt, wobei das Näherungssignal Entfernungsinformationen umfasst; und durch Folgendes gekennzeichnet ist:
beim Empfangen von mindestens zwei oder mindestens drei Signalen mit allmählich abnehmenden Entfernungsinformationen, gesendet von einer beliebigen vorgesehenen Taste (1, 2, 3) der Vielzahl von Tasten (1, 2, 3) in zeitlicher Abfolge innerhalb eines bestimmten Zeitraums T, Festlegen, dass die vorgesehene Taste (1, 2, 3) ausgelöst wird.

11. Verfahren zum Festlegen gemäß Anspruch 10, ferner umfassend Empfangen zweier beliebiger Signale, die von einer beliebigen vorgesehenen Taste der Vielzahl von Tasten (1, 2, 3) in zeitlicher Abfolge innerhalb des bestimmten Zeitraums T gesendet werden, wobei die zwei Signale jeweils erste Entfernungsinformationen a₁ und zweite Entfernungsinformationen a₂ umfassen und, wenn die zwei Signale erfüllen, dass das erste Entfernungssignal a₁ in einem ersten Entfernungsbereich R₁ liegt und das zweite Entfernungssignal a₂ in einem zweiten Entfernungsbereich R₂ liegt, festgelegt wird, dass die vorgesehene Taste (1, 2, 3) ausgelöst wird, wobei ein Zwischenwert des ersten Entfernungsbereichs R₁ größer ist als ein Zwischenwert des zweiten Entfernungsbereichs R₂.

12. Verfahren zum Festlegen nach Anspruch 10 oder 11, ferner umfassend Empfangen dreier beliebiger Signale, die von einer beliebigen vorgesehenen Taste (1, 2, 3) der Vielzahl von Tasten (1, 2, 3) in zeitlicher Abfolge innerhalb des bestimmten Zeitraums T gesendet werden, wobei die drei Signale jeweils erste Entfernungsinformationen a₁, zweite Entfernungsinformationen a₂ und dritte Entfernungsinformationen a₃ umfassen und, wenn die drei Signale erfüllen, dass das erste Entfernungssignal a₁ in einem ersten Entfernungsbereich R₁ liegt, das zweite Entfernungssignal a₂ in einem zweiten Entfernungsbereich R₂ liegt und das dritte Entfernungssignal a₃ in einem dritten Entfernungsbereich R₃ liegt, festgelegt wird, dass die vorgesehene Taste (1, 2, 3) ausgelöst wird, wobei ein Zwischenwert des ersten Entfernungsbereichs R₁ größer ist als ein Zwischenwert des zweiten Entfernungsbereichs R₂, und der Zwischenwert des zweiten Entfernungsbereichs R₂ größer ist als ein Zwischenwert des dritten Entfernungsbereichs R₃.

13. Verfahren zum Festlegen gemäß Anspruch 10, 11 oder 12, ferner Folgendes umfassend: beim Empfangen des Kontaktsignals, das vom Mikroschalter (42) einer beliebigen vorgesehenen Taste (1, 2, 3) der Vielzahl von Tasten (1, 2, 3) aufgrund von deren Betätigung gesendet wird, Festlegen, dass die vorgesehene Taste (1, 2, 3) ausgelöst wird.

## Revendications

1. Dispositif de commande d'ascenseur, comprenant un panneau de commande (9) comprenant une pluralité de boutons (1, 2, 3), les boutons (1, 2, 3) comprenant :
un capteur sans contact (12), qui est capable de détecter l'approche d'un objet (5) et de générer un signal de proximité ; et
un micro-interrupteur (42), qui est capable de générer un signal de contact lorsque le bouton (1, 2, 3) est enfoncé ;
dans lequel le dispositif de commande d'ascenseur comprend également :
un processeur (8) connecté au panneau de commande (9) pour recevoir le signal de proximité et le signal de contact ; **caractérisé en ce que** :
le processeur (8) est configuré pour, lors de la réception d'au moins deux ou d'au moins trois signaux de proximité avec des informations de distance progressivement décroissantes envoyées par un quelconque bouton désigné de la pluralité de boutons (1, 2, 3) dans une séquence temporelle au cours d'une période de temps spécifique T, déterminer que le bouton désigné (1, 2, 3) est déclenché.

2. Dispositif de commande d'ascenseur selon la revendication 1, dans lequel le panneau de commande (9) comprend :
un panneau de boutons (11), le capteur sans contact (12) étant situé sur un côté arrière du panneau de boutons (11) ; et
une carte de circuit imprimé (4), le capteur sans contact (12) étant couplé électriquement à la carte de circuit imprimé (4) ;
dans lequel la carte de circuit imprimé (4) comprend également le micro-interrupteur (42), et le panneau de boutons (11) est soutenu par un élément à ressort (13), de sorte qu'une pression sur le panneau de boutons (11) peut en outre provoquer l'actionnement du micro-interrupteur (42) sur le circuit imprimé (4).

3. Dispositif de commande d'ascenseur selon la revendication 1 ou 2, dans lequel le capteur sans contact (12) est un capteur TOF (12, 121, 122) capable de détecter une distance par rapport à un objet, et le signal de proximité comprend des informations de distance.

4. Dispositif de commande d'ascenseur selon une quelconque revendication précédente, dans lequel le processeur (8) est configuré pour recevoir deux signaux quelconques envoyés par un quelconque bouton désigné (1, 2, 3) de la pluralité de boutons (1, 2, 3) dans une séquence temporelle au cours d'une période de temps spécifique T, dans lequel les deux signaux comprennent respectivement des premières informations de distance a₁ et des deuxièmes informations de distance a₂, et lorsque les deux signaux satisfont au fait que le premier signal de distance a₁ se trouve dans une première plage de distance R₁ et que le deuxième signal de distance a₂ se trouve dans une deuxième plage de distance R₂, il est déterminé que le bouton désigné (1, 2, 3) est déclenché, dans lequel une valeur intermédiaire de la première plage de distance R₁ est supérieure à une valeur intermédiaire de la deuxième plage de distance R₂.

5. Dispositif de commande d'ascenseur selon une quelconque revendication précédente, dans lequel le processeur (8) est configuré pour recevoir trois signaux quelconques envoyés par un quelconque bouton désigné (1, 2, 3) de la pluralité de boutons (1, 2, 3) dans une séquence temporelle au cours d'une période de temps spécifique T, dans lequel les trois signaux comprennent respectivement des premières informations de distance a₁, des deuxièmes informations de distance a₂ et des troisièmes informations de distance a₃, et lorsque les trois signaux satisfont au fait que le premier signal de distance a₁ se trouve dans une première plage de distance R₁, que le deuxième signal de distance a₂ se trouve dans une deuxième plage de distance R₂ et que le troisième signal de distance a₃ se trouve dans une troisième plage de distance R₃, il est déterminé que le bouton désigné (1, 2, 3) est déclenché, dans lequel une valeur intermédiaire de la première plage de distance R₁ est supérieure à une valeur intermédiaire de la deuxième plage de distance R₂ et la valeur intermédiaire de la deuxième plage de distance R₂ est supérieure à une valeur intermédiaire de la troisième plage de distance R₃.

6. Dispositif de commande d'ascenseur selon l'une quelconque des revendications 1 à 5, dans lequel le processeur (8) est configuré pour, lors de la réception du signal de contact envoyé par le micro-interrupteur (42) d'un quelconque bouton désigné de la pluralité de boutons (1, 2, 3) en raison de son actionnement, déterminer que le bouton désigné (1, 2, 3) est déclenché.

7. Dispositif de commande d'ascenseur selon l'une quelconque des revendications 2 à 6, dans lequel le panneau de boutons (11) est un panneau transmettant la lumière, et la carte de circuit imprimé (4) est en outre dotée de lumières LED (41), qui sont allumées lorsque le bouton (1, 2, 3) est déclenché.

8. Dispositif de commande d'ascenseur selon l'une quelconque des revendications 2 à 7, dans lequel le capteur sans contact (12) est fixé au côté arrière du panneau de boutons (11), et le panneau de boutons (11) est supporté élastiquement sur le circuit imprimé (4) par un ressort (13).

9. Système d'ascenseur, comprenant le dispositif de commande d'ascenseur selon l'une quelconque des revendications 1 à 8.

10. Procédé de détermination du déclenchement d'un dispositif de commande d'ascenseur, dans lequel le dispositif de commande d'ascenseur comprend un panneau de commande (9) comprenant une pluralité de boutons (1, 2, 3), les boutons (1, 2, 3) comprennent un capteur sans contact (12) et un micro-interrupteur (42), et le procédé comprend :
la génération d'un signal de proximité lorsque l'un quelconque de la pluralité de boutons (1, 2, 3) détecte l'approche d'un objet (5), le signal de proximité comprenant des informations de distance ; et est **caractérisé en ce que** :
lors de la réception d'au moins deux ou d'au moins trois signaux avec des informations de distance progressivement décroissantes envoyées par un quelconque bouton désigné (1, 2, 3) de la pluralité de boutons (1, 2, 3) dans une séquence temporelle au cours d'une période de temps spécifique T, il est déterminé que le bouton désigné (1, 2, 3) est déclenché.

11. Procédé de détermination selon la revendication 10, comprenant également la réception de deux signaux quelconques envoyés par un quelconque bouton désigné de la pluralité de boutons (1, 2, 3) dans une séquence temporelle au cours de la période de temps spécifique T, dans lequel les deux signaux comprennent respectivement des premières informations de distance a₁ et des deuxièmes informations de distance a₂, et lorsque les deux signaux satisfont au fait que le premier signal de distance a₁ se trouve dans une première plage de distance R₁ et que le deuxième signal de distance a₂ se trouve dans une deuxième plage de distance R₂, il est déterminé que le bouton désigné (1, 2, 3) est déclenché, dans lequel une valeur intermédiaire de la première plage de distance R₁ est supérieure à une valeur intermédiaire de la deuxième plage de distance R₂.

12. Procédé de détermination selon la revendication 10 ou 11, comprenant également la réception de trois signaux quelconques envoyés par un quelconque bouton désigné (1, 2, 3) de la pluralité de boutons (1, 2, 3) dans une séquence temporelle au cours de la période de temps spécifique T, dans lequel les trois signaux comprennent respectivement des premières informations de distance a₁, des deuxièmes informations de distance a₂ et des troisièmes informations de distance a₃, et lorsque les trois signaux satisfont au fait que le premier signal de distance a₁ se trouve dans une première plage de distance R₁, que le deuxième signal de distance a₂ se trouve dans une deuxième plage de distance R₂ et que le troisième signal de distance a₃ se trouve dans une troisième plage de distance R₃, il est déterminé que le bouton désigné (1, 2, 3) est déclenché, dans lequel une valeur intermédiaire de la première plage de distance R₁ est supérieure à une valeur intermédiaire de la deuxième plage de distance R₂ et la valeur intermédiaire de la deuxième plage de distance R₂ est supérieure à une valeur intermédiaire de la troisième plage de distance R₃.

13. Procédé de détermination selon la revendication 10, 11 ou 12, comprenant également : lors de la réception du signal de contact envoyé par le micro-interrupteur (42) d'un quelconque bouton désigné (1, 2, 3) de la pluralité de boutons (1, 2, 3) en raison de son actionnement, la détermination que le bouton désigné (1, 2, 3) est déclenché.
